# EUROPEAN PATENT SPECIFICATION

(11) **EP 1 228 731 B1**
(45) Date of publication and mention of the grant of the patent: **21.07.2004**
(21) Application number: 02075393.5
(22) Date of filing: 31.01.2002
(51) Int. Cl.: A47J 37/12

(54) **Electric deep fat fryer**
Elektrisches Fritiergerät
Friteuse électrique

(30) Priority: 02.02.2001 BE 200100081
(43) Date of publication of application: 07.08.2002
(73) Proprietor: van Ratingen, naamloze vennootschap, 3500 Hasselt (BE)
(72) Inventor: van Ratingen, Joseph, 3500 Hasselt (BE)
(74) Representative: Luys, Marie-José

(56) References cited:
- EP-A- 0 133 906
- US-A- 3 134 008
- US-A- 3 998 146
- US-A- 4 058 703
- US-A- 4 503 320

## Description

This invention relates to an electric deep fat fryer with the principle of the "cold zone", which comprises a vessel and an immersion resistor with a heating part which is situated in the vessel at a small distance from the bottom of the vessel, and a connection part connecting the heating part to a thermostat, the sensor of which is situated in the vessel.

By means of the regulating part of the thermostat and an on- and off-switch, situated in a switch box, the immersion resistor is supplied with power.

In consideration of the fact that usually the immersion resistor, together with the thermostat, can be removed from the vessel, the sensor of the thermostat mostly is mounted on this immersion resistor, between two parts of the heating part.

With known electric deep fat fryers, this heating part extends almost in one plane, and the sensor of the thermostat is situated in this same plane.

It has been noted that the heating of the frying oil with such deep fat fryers is not optimum.

Document US-4058703 discloses the features in the preamble of claim 1.

The sensor is influenced by the temperature in the "cold" zone, this is the zone situated in the vessel beneath the heating part. In this zone, the frying oil, during frying, remains colder than thereabove, although the temperature in fact can rise up to 160°C.

The sensor does not react to the heating of the frying oil above the "cold" zone in an optimum manner.

The invention aims at an electric deep fat fryer which remedies said disadvantages and, with the same capacity of the immersion resistor, allows for a faster heating and a shorter frying process.

According to the invention, this aim is achieved through the features mentioned in the characterizing portion of claim 1.

Surprisingly, it was noted that, in comparison to an immersion resistor with the same capacity, however, with the sensor in the plane of a flat heating part, a 15 to 40% shorter frying process was obtained.

Preferably, the heating part of the immersion resistor comprises parts which are situated at different heights in respect to the bottom of the vessel, and the sensor of the thermostat is attached to a part of the heating part which is situated higher than the lowermost part.

In this case, the sensor of the thermostat may be provided, for example, together with the sensor of a safety system which protects the immersion resistor against excessive heating.

The lowermost-situated part of the heating part of the immersion resistor is situated at a distance of 5 to 15 mm from the bottom of the vessel.

With such positioning, the cold zone seemed to be quieter and not so cold, as a result of which possible water droplets were vaporized before they could reach the bottom of the vessel, such that on the bottom, no accumulation up to large water droplets could take place.

In the classical electric deep fat fryers, the heating part is situated at 25 mm or more from the bottom of the vessel. It was noted that with such deep fat fryers, a dangerous splashing of the frying oil may occur.

The products to be fried, for example, cut potatoes, which are brought into the deep fat fryer in a basket, however, contain an amount of water, a part of which is set free in the oil during the possible pre-frying as well as during the final frying.

As the specific weight of water is larger than that of oil, this water will sink and will accumulate below, in the cold zone. There, the water may accumulate up to relatively large drops which, when the temperature, during frying, rises in the cold zone, up to a value of even 160°C, are transformed into steam.

In particular when the temperature in the cold zone rises above 150°C, the mass of steam suddenly will rise upward through the oil, as a gas bubble, with a force which will cause the oil to splash.

In the deep fat fryer according to the invention, the heating part of the immersion resistor, as usual, may form a loop, however, this loop preferably does not extend in a plane parallel to the bottom. It comprises parts which are situated higher than others.

In consideration of the fact that the resistor must deliver a certain capacity, whereas the bottom surface of the vessel is limited, the loop in the known fryers mostly does not form a simple figure, but, for example, a loop with two or more adjacent U-shaped paths, with the bottom removed from the upward portions.

Whereas with known deep fat fryers, the portions forming a U-shaped path are parallel to the bottom of the vessel, according to the invention the heating element preferably also forms a loop comprising two or more adjacent loop portions which extend according to a U-shaped path and which, thus, each comprise two legs, whereby, however, loop portions or legs of loop portions are situated at different heights in respect to the bottom of the vessel and the sensor is attached to one or more higher-situated legs of loop portions.

With the intention of better showing the characteristics of the invention, hereafter, as an example without any limitative character, a preferred form of embodiment of an electric deep fat fryer according to the invention is described, with reference to the accompanying drawings, wherein:
Figure 1 schematically represents an electric deep fat fryer according to the invention, with cut-off vessel;
Figure 2 represents a perspective top view of the immersion resistor with sensor from the deep fat fryer of figure 1;
Figure 3 represents a perspective view of the side of the immersion resistor from the deep fat fryer of figure 1;
Figures 4 and 5 represent perspective views analogous to that of figure 2, however, relating to two other forms of embodiment of the invention.

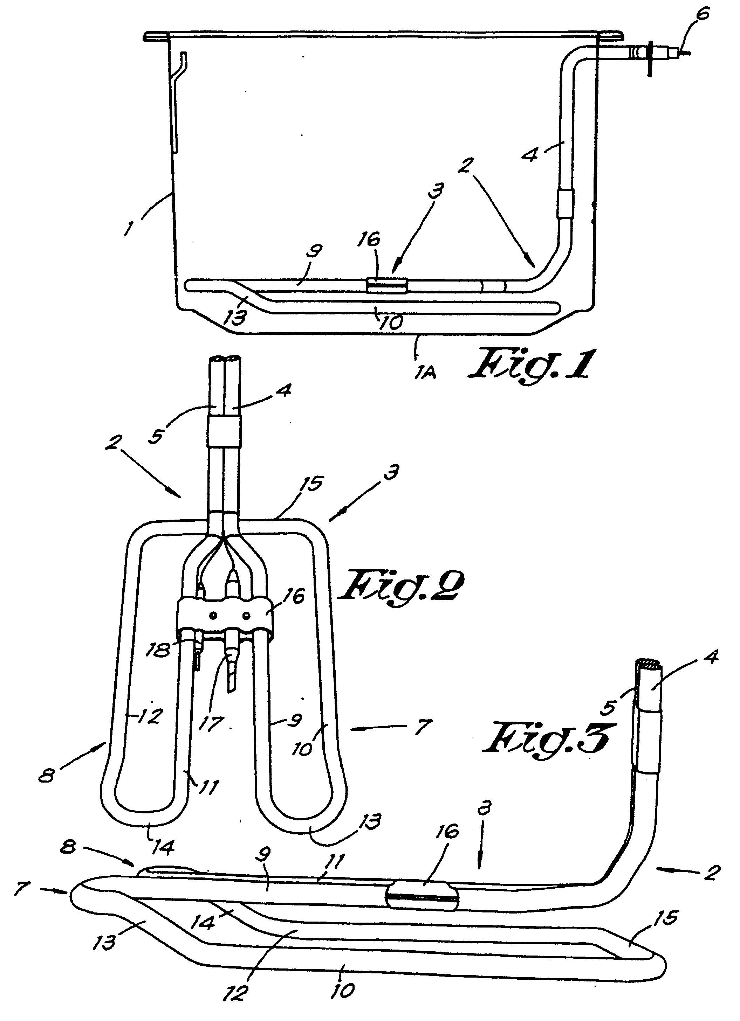

The electric deep fat fryer with the principle of "cold zone" represented in figure 1 substantially consists of a vessel 1, a removable electric immersion resistor 2 installed therein at a distance from the bottom 1A of the vessel 1.

Possibly, a filter cover can be provided on the vessel 1.

In the represented example, the vessel 1 is an inner vessel of metal which further is surrounded by an outer vessel or mantle, which, for simplicity's sake, is not represented in figure 1.

On the mantle, a switch box, also not represented, is attached for connecting the power supply which, amongst others, comprises an on- and off-switch and a thermostat.

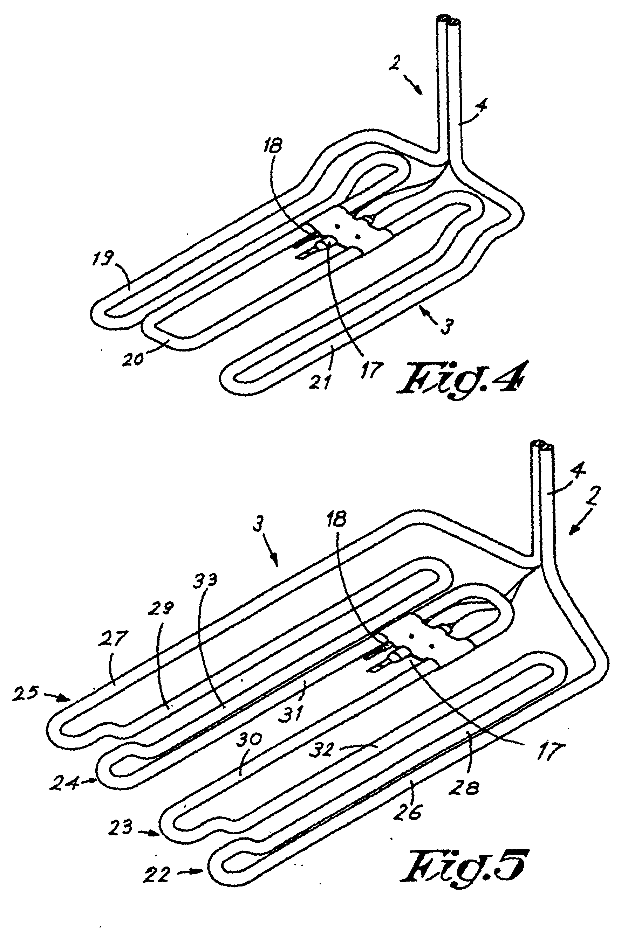

The immersion resistor 2, which in figures 2 and 3 is represented separately, consists of a heating part 3 forming a loop, the two extremities of which connect to two connection legs 4 and 5 of a connection part, extending adjacent to each other in upward direction, which are bent outward at the top of the vessel 1 and comprise connecting pins 6 at their extremity, with which pins they are connected to the power supply in the switch box.

The heating part 3 comprises two loop parts 7 and 8 situated next to each other which extend according to a U-shaped path and, thus, comprise two straight legs 9 and 10; 11 and 12. The loop parts 7 and 8 are symmetrical in respect to each other.

The inner legs 9 and 11 of these loop parts 7 and 8 connect with one extremity to the connection legs 4 and 5, respectively.

With its other extremity, the inner leg 9, by means of a rounded connection 13, is connected to an extremity of the outer leg 10 of the loop part 7, whereas the inner leg 11 with its other extremity, by means of a rounded connection 14, connects to an extremity of the outer leg 12.

The connections 13 and 14 do not only provide for a lateral distance between the legs 9 and 10, 11 and 12, respectively, but also for a distance therebetween in height direction, as, first of all, can be seen in figures 1 and 3. The outer legs 10 and 12 thus form parts which are situated lower, for example, between 1 and 2 cm lower, and, for example, approximately 1,5 cm lower, than the inner legs 9 and 11.

At the side of the connection legs 4 and 5, the loop 3 has a connection part 15 between the extremities of the outer legs 10 and 12. This connection part 15, too, thus is situated lower than the legs 9 and 11 and at the same distance from the bottom 1A of the vessel 1 as the outer legs 10 and 12 which are approximately parallel to this bottom 1A.

The distance from the bottom 1A on which these lowermost-situated parts, in the aforementioned example, the legs 10 and 12 and the connection part 15, are situated, is 5 to 15 mm, preferably 10 to 15 mm and, for example, 12 mm.

The inner legs 9 and 11 are retained at a fixed distance from each other by means of a clamping piece 16 in which also the sensor 17 of the thermostat and the sensor 18 of a safety element against overheating of the heating part 3 are clamped. Thus, both sensors 17 and 18 are situated approximately at the height of the legs 9 and 11 in respect to the bottom 1A.

In this way, the sensor 17 is situated higher than the lowermost legs 10 and 12 and the connection part 15, such that, when the immersion resistor 2 is heating the oil in the vessel 1, a portion of the oil under the sensor 17 is heated. Thus, the sensor 17 is situated in heated oil and is not or little influenced by the temperature in the cold zone under the legs 10, 12 and the connection part 15.

As a consequence, the sensor 17 can work optimally and the amount of oil which is heated is larger, which results in a 15 to 40% shorter frying process than with a classical immersion resistor with a flat loop of the same capacity.

Further, the cold zone, in particular due to the positioning of the lowermost parts in the proximity of the bottom 1A of the vessel 1, is calmer and there is less danger for splashing as a result of water bubbles in the cold zone.

In a variant, not the inner legs 9 and 11 are connected to the connection legs 4 and 5, but the outer legs 10 and 12, whereas the inner legs 9 and 11 are connected to each other next to the connection legs 4 and 5, by means of a rounded connection. The outer legs 10 and 12 remain situated lower than the inner legs 9 and 11, and the sensor 17 also is attached to the inner legs 9 and 11.

Another variant of the immersion resistor 2 is represented in figure 4. The heating part 3 of the immersion resistor 2 forms a loop with three loop parts 19, 20 and 21, each extending according to a U-shaped path.

In this variant, all loop parts 19, 20 and 21 are approximately parallel to the bottom 1A of the vessel 1, however, the two outer loop parts 19 and 21 are situated lower and, therefore, more in the proximity of the bottom 1A of the vessel 1 than the central loop part 20.

The sensor 17 is provided between the legs of this central loop part 20.

In figure 5, still another variant is represented in which the heating part 3 of the immersion resistor comprises four loop parts 22,23,24 and 25 situated next to each other.

The most outwardly situated legs 26 and 27 of two outer loop parts 22 and 25 are situated higher than the other two legs 28 and 29 of these loop parts 22 and 25, whereas the most inwardly situated legs 30 and 31 of the remaining loop parts 23 and 24 are situated higher than the most outwardly situated legs 32 and 33 of these loop parts 23 and 24.

The sensor 17 is attached to the most inwardly and thus higher situated legs 30 and 31 of the two most inwardly situated loop parts 23 and 24 and is situated at the height of these legs 30 and 31.

It is obvious that the immersion resistor can adapt many other forms. Such, it may comprise parts at more than two different heights above the bottom of the vessel, for example, on three levels. It is important that the sensor 17 is not attached on the lowermost part, but thereabove, whereby this lowermost part preferably is situated at a distance between 5 and 15 mm from this bottom.

The invention is in no way limited to the form of embodiment described heretofore and represented in the figures, however, such deep fat fryer can be realized in different variants without leaving the scope of the invention.

## Claims

1. An electric deep fat fryer comprising a vessel (1), an immersion resistor (2) with a heating part (3) positioned at a distance from a bottom (1A) of the vessel (1), a connection part (4, 5) connecting the heating part (3) to a thermostat with a sensor (17), the heating part (3) of the immersion resistor (2) comprising a first lowermost part (10,12,15,19,21,32,33) and a second uppermost part (9,11,20,26,27,28,29) situated above the first lowermost part with respect to the bottom (1A) of the vessel the sensor (17) of the thermostat being made as a separate part which is situated at a distance above the first lowermost part (10,12,15,19,21,32,33) of the heating part (3) of the immersion resistor (2), **characterised in that** the first lowermost part (10,12,15,19,21,32,33) of the heating part (3) of the immersion resistor (2) is positioned at a distance of between 5 and 15 mm from the bottom (1A) of the vessel (1) in view of creating in the cooking fluid at a position between the bottom (1A) and the first lowermost part, a first zone having a first temperature, which is lower than the cooking temperature.

2. An electric deep fat fryer as claimed in claim 1, **characterised in that** the deep fat fryer contains one single immersion resistor (2).

3. An electric deep fat fryer as claimed in any one of claims 1-2, **characterised in that** the heating part (3) of the immersion resistor (2) forms a loop.

4. An electric deep fat fryer as claimed in any one of claims 1-3, **characterised in that** the heating part (3) of the immersion resistor (2) forms a loop, having a plurality of parts (10,12,15,19,21,28,29,32,33; 9,11,20,26,27,30,31), which are located at a different distance from the bottom (1A) of the vessel (1).

5. An electric deep fat fryer as claimed in claim 4, **characterised in that** the sensor (17) is attached to at least one part (9,11,20,26,27,28,29,30,31) of the heating part (3) of the immersion resistor (2) which is situated above the first lowermost part (10,12,15,19,21,32,33).

6. An electric deep fat fryer as claimed in any one of claims 1-5, **characterised in that** an additional sensor (18) of a safety element is provided, in view of protecting the immersion resistor (2) against excessive heating, the additional sensor (18) being attached to and situated in the vicinity of the second uppermost part (9,11,20,26,27,28,29).

7. An electric deep fat fryer as claimed in any one of claims 3-6, **characterized in that** the heating part (3) forms a loop comprising at least two adjacent loop parts (7,8;19,20,21;22-25) which extend according to a U-shaped path; **in that** the loop parts each comprise two legs (9,10;11,12;26-31); **in that** at least one leg (9,10,11,12;26-31) of the loop parts (7,8;19-21;22-25) is situated at a different distance from the bottom (1A) of the vessel (1) in height direction of the vessel (1) as compared to the remaining legs; and **in that** the sensor (17) is attached to at least one higher-situated leg (9,11;30,31).

8. An electric deep fat fryer as claimed in claim 7, **characterized in that** the sensor (17) is situated at approximately the same height as the higher-situated legs (9,11;30,31) of loop parts (7, 8;19-21;22-25) with respect to the bottom (1A) of the vessel (1) and at a distance from the higher-situated legs of the loop parts.

## Patentansprüche

1. Elektrisches Fritiergerät mit einem Behälter (1), einem Tauchwiderstand (2) mit einem Heizteil (3), der in Entfernung von einem Boden (1A) des Behälters (1) positioniert ist, einem Anschlussteil (4, 5) zum Anschließen des Heizteils (3) an einen Thermostat mit einem Sensor (17), wobei der Heizteil (3) des Tauchwiderstands (2) einen ersten untersten Teil (10, 12, 15, 19, 21, 32, 33) und einen zweiten obersten Teil (9, 11, 20, 26, 27, 28, 29) über dem untersten Teil in Bezug auf den Boden (1A) des Behälters (1) umfasst, wobei der Sensor (17) des Thermostats, der als ein getrenntes Teil hergestellt ist, das sich in einer Entfernung über dem ersten untersten Teil (10, 12, 15, 19, 21, 32, 33) des Heizteils (3) des Tauchwiderstands (2) befindet, **dadurch gekennzeichnet, dass** der erste unterste Teil (10, 12, 15, 19, 21, 32, 33) des Heizteils (3) des Tauchwiderstands (2) in einer Entfernung zwischen 5 und 15 mm vom Boden (1A) des Behälters (1) positioniert ist, um in der Kochflüssigkeit in einer Position zwischen dem Boden (1A) und dem ersten untersten Teil eine erste Zone zu schaffen, die eine erste Temperatur hat, die geringer ist als die Kochtemperatur.

2. Elektrisches Fritiergerät nach Anspruch 1, **dadurch gekennzeichnet, dass** das Fritiergerät einen einzigen Tauchwiderstand (2) enthält.

3. Elektrisches Fritiergerät nach einem der Ansprüche 1-2, **dadurch gekennzeichnet, dass** der Heizteil (3) des Tauchwiderstands (2) eine Schleife bildet.

4. Elektrisches Fritiergerät nach einem der Ansprüche 1-3, **dadurch gekennzeichnet, dass** der Heizteil (3) des Tauchwidertands (2) eine Schleife bildet, die eine Vielzahl von Teilen (10, 12, 15, 19, 21, 28, 29, 32, 33; 9, 11, 20, 26, 27, 30, 31) hat, die in verschiedenen Entfernungen vom Boden (1A) des Behälters (1) liegen.

5. Elektrisches Fritiergerät nach Anspruch 4, **dadurch gekennzeichnet, dass** der Sensor (17) zumindest an einem Teil (9, 11, 20, 26, 27, 28, 29, 30, 31) des Heizteils (3) des Tauchwiderstands (2) befestigt ist, der über dem untersten Teil (10, 12, 15, 19, 21, 32, 33) liegt.

6. Elektrisches Fritiergerät nach einem der Ansprüche 1-5, **dadurch gekennzeichnet, dass** ein zusätzlicher Sensor (18) eines Sicherheitselements vorgesehen ist, um den Tauchwiderstand (2) vor übermäßigem Erhitzen zu schützen, wobei der zusätzliche Sensor (18) an dem zweiten obersten Teil (9, 11, 20, 26, 27, 28, 29) befestigt ist und in dessen Nähe liegt.

7. Elektrisches Fritiergerät nach einem der Ansprüche 3-6, **dadurch gekennzeichnet, dass** der Heizteil (3) eine Schleife bildet, die mindestens zwei benachbarte Schleifenteile (7,8; 19, 20, 21; 22-25) umfasst, die sich entlang eines U-förmigen Verlaufs erstrecken; dadurch, dass die Schleifenteile jeweils zwei Beine (9, 10; 11, 12; 36-31) umfassen; dadurch, dass mindestens ein Bein (9, 10; 11, 12; 36-31) der Schleifenteile (7, 8; 19-21; 22-25) im Vergleich zu den restlichen Beinen in einer unterschiedlichen Entfernung vom Boden (1A) des Behälters (1) in Höhenrichtung des Behälters (1) liegt, und dadurch, dass der Sensor (17) an mindestens einem höher liegenden Bein (9, 11; 30, 31) befestigt ist.

8. Elektrisches Fritiergerät nach Anspruch 7, **dadurch gekennzeichnet, dass** der Sensor (17) etwa in der gleichen Höhe wie die höher liegenden Beine (9, 11; 30, 31) der Schleifenteile (7, 8; 19-21; 22-25) in Bezug auf den Boden (1A) des Behälters (1) und in einer Entfernung von den höher liegenden Beinen der Schleifenteile liegt.

## Revendications

1. Friteuse électrique comprenant une cuve (1), une résistance immergée (2) avec une partie chauffante (3) positionnée à une distance d'un fond (1A) de la cuve, une pièce de connexion (4, 5) connectant la partie chauffante (3) à un thermostat avec un capteur (17), la partie chauffante (3) de la résistance immergée (2) comprenant une première partie tout en bas (10, 12, 15, 19, 21, 32, 33) et une deuxième partie tout en haut (9, 11, 20, 26, 28, 29) située au-dessus de la première partie tout en bas par rapport au fond (1A) de la cuve, le capteur (17 étant réalisé comme une pièce séparée qui est située à une distance au-dessus de la première partie tout en bas (10, 12, 15, 19, 21, 32, 33) de la partie chauffante (3) de la résistance immergée (2), **caractérisée en ce que** la première partie tout en bas (10, 12, 15, 19, 21, 32, 33) de la partie chauffante (3) de la résistance immergée (2) est positionnée à une distance comprise entre 5 et 15 mm du fond (1A) de la cuve (1) en vue de créer dans le fluide de cuisson à une position entre le fond (1A) et la première partie tout en bas, une première zone ayant une première température qui est plus basse que la température de cuisson.

2. Friteuse électrique selon la revendication 1, **caractérisée en ce que** la friteuse électrique contient une seule résistance immergée (2).

3. Friteuse électrique selon une quelconque des revendications 1 - 2, **caractérisée en ce que** la partie chauffante (3) de la résistance immergée (2) forme une boucle.

4. Friteuse électrique selon une quelconque des revendications 1 - 3, **caractérisée en ce que** la partie chauffante (3) de la résistance immergée (2) forme une boucle ayant une pluralité de parties (10, 12, 15, 19, 21, 28, 29, 32, 33 ; 9, 11, 20, 26, 27, 30, 31) qui sont situées à une distance différente du fond (1A) de la cuve (1).

5. Friteuse électrique selon la revendication 4, **caractérisée en ce que** le capteur (17) est attaché à au moins une partie (9, 11, 20, 26, 27, 28, 29, 30, 31) de la partie chauffante (3) de la résistance immergée (2) qui est située au-dessus de la première partie tout en bas (10, 12, 15, 19, 21, 32, 33).

6. Friteuse électrique selon une quelconque des revendications 1 - 5, **caractérisée en ce qu'**un capteur (18) supplémentaire d'un élément de sécurité est prévu, en vue de protéger la résistance immergée (2) contre un échauffement excessif, le capteur (18) supplémentaire étant attaché à la deuxième partie tout en haut (9, 11, 20, 26, 27, 28, 29) et étant situé à proximité de celle-ci.

7. Friteuse électrique selon une quelconque des revendications 3 - 6, **caractérisée en ce que** la partie chauffante (3) forme une boucle comprenant au moins deux parties de boucle adjacentes (7, 8 ; 19, 20, 21 ; 22-25) qui s'étendent suivant un trajet en forme de U, **en ce que** les parties de boucle comprennent chacune deux branches (9, 10, 11, 12 ; 26-31), **en ce qu'**au moins une branche (9, 10, 11, 12 ; 26-31) des parties de boucle (7, 8 ; 19-21 ; 22-25) est située à une distance différente du fond (1A) de la cuve (1) dans le sens de la hauteur de la cuve (1 ) comparé aux branches restantes, et **en ce que** le capteur (17) est attaché à au moins une branche située plus haut (9, 11 ; 30, 31).

8. Friteuse électrique selon la revendication 7, **caractérisée en ce que** le capteur (17) est situé approximativement à la même hauteur, par rapport au fond (1A) de la cuve (1), que les branches situées plus haut (9, 11 ; 30, 31) des parties de bouche (7, 8 ; 19-21 ; 22-25) et à une distance des branches situées plus haut des parties de boucle.
